# EUROPEAN PATENT APPLICATION

(11) **EP 4 841 499 A1**
(43) Date of publication of application: **18.11.2026**
(21) Application number: 26177784.1
(22) Date of filing: 11.05.2026
(51) Int. Cl.: G06F 40/30, G06F 40/177

(54) **COMPUTER PROGRAM, INFORMATION PROCESSING METHOD, AND INFORMATION PROCESSING APPARATUS**

(30) Priority: 16.05.2025 JP 2025082806
(71) Applicant: FUJITSU LIMITED, Kawasaki-shi, Kanagawa 211-8588 (JP)
(72) Inventor: Namiki, Masanobu, Kawasaki-shi, Kanagawa, 211-8588 (JP); Murata, Kengo, Kawasaki-shi, Kanagawa, 211-8588 (JP); Aoki, Yasuhiro, Kawasaki-shi, Kanagawa, 211-8588 (JP); Nakayama, Osafumi, Kawasaki-shi, Kanagawa, 211-8588 (JP)
(74) Representative: Hoffmann Eitle

(57) **Abstract**

An information processing apparatus extracts a plurality of character groups from a first document based on relative positions between characters included in the first document that is tabulated. Region information indicating a placement region in the first document is assigned to each character group. A first character group including a predetermined character string is identified out of the character groups. It is determined whether the first character group and each of a plurality of second character groups, which are character groups aside from the first character group, are related based on first region information indicating a placement region of the first character group and second region information indicating placement regions of the second character groups. A second document in which third character groups, which are second character groups that are related to the first character group, are arranged following the first character group is generated.

## Description

### FIELD

The embodiments discussed herein relate to a computer program, an information processing method, and an information processing apparatus.

### BACKGROUND

Documents that have been converted to electronic data (hereinafter also referred to simply as "documents") include documents in the form of tables ("tabulated documents") for easy viewing by people. In a tabulated document, information is arranged in a rectangular frame to promote visual recognition by a user. As one example, minutes of a meeting used to indicate the content of the meeting may be created as a tabulated document. It is possible to extract text from tabulated documents, convert the text into a structured document in a standardized data format, for example, and store the resulting document. Stored information in a structured document makes it easy to handle the information in subsequent analysis, search, and the like.

As one example of a technique relating to document processing, a technique of analyzing documents and annotating the document has been proposed (see, for example, Japanese Laid-open Patent Publication No. 2025-23185).

In a tabulated document, the relevance between pieces of text set in plurality of rectangular frames are expressed by the positional relationships between the frames. However, after text has been extracted from a tabulated document, the relevance between a plurality of pieces of text that were expressed in the tabulated form becomes unclear, and related pieces of text may become scattered.

### SUMMARY

In one aspect, the present application aims to limit the dissipation of related texts extracted from tabulated documents.

In one aspect, there is provided a computer program that causes a computer to execute a process including: acquiring a first document that is tabulated; extracting a plurality of character groups from the first document based on relative positions between characters included in the acquired first document; assigning region information indicating a placement region in the first document to each of the plurality of character groups; identifying a first character group including a predetermined character string from the plurality of character groups; determining whether the identified first character group and each of a plurality of second character groups, which are character groups in the plurality of character groups aside from the first character group, are related to each other, based on first region information indicating a placement region of the first character group and second region information indicating placement regions of the plurality of second character groups; and generating a second document in which third character groups, which are character groups related to the first character group out of the plurality of second character groups, are arranged following the first character group.

### BRIEF DESCRIPTION OF DRAWINGS

FIG. 1 depicts one example of an information processing method according to a first embodiment;
FIG. 2 depicts an example system configuration according to a second embodiment;
FIG. 3 depicts one example hardware of a server;
FIG. 4 depicts one example of a tabulated document;
FIG. 5 depicts examples of item names and item contents;
FIG. 6 depicts an example extraction result of text data;
FIG. 7 depicts one example of text extraction by a text chunk rearrangement method;
FIG. 8 depicts one example of a text extraction result produced by the text chunk rearrangement method;
FIG. 9 is a block diagram depicting example functions of a server for implementing the text chunk rearrangement method;
FIG. 10 depicts one example of target item information;
FIG. 11 depicts one example of a prompt template;
FIG. 12 is a flowchart depicting an example procedure of an information extraction process;
FIG. 13 depicts one example of a text chunk extraction process;
FIG. 14 depicts one example of a generated text chunk list;
FIG. 15 depicts one example of key text chunk selection process;
FIG. 16 is a flowchart depicting an example procedure of the text chunk reordering process;
FIG. 17 depicts a first example of a method of extracting related text chunks;
FIG. 18 depicts one example of extracted text after rearrangement of text chunks;
FIG. 19 depicts a second example of a method of extracting related text chunks;
FIG. 20 depicts one example of a prompt generation process;
FIG. 21 depicts one example of a prompt;
FIG. 22 depicts one example of a method of verifying information extraction results; and
FIG. 23 depicts one example of an evaluation result of an information extraction process.

### DESCRIPTION OF EMBODIMENTS

Several embodiments will be described below with reference to the accompanying drawings. Note that a plurality of the following embodiments may be implemented in combination within a range that remains technically consistent.

### First Embodiment

The first embodiment is an information processing method for suppressing scattering of a plurality of related pieces of text when arranging text that has been extracted from a tabulated document.

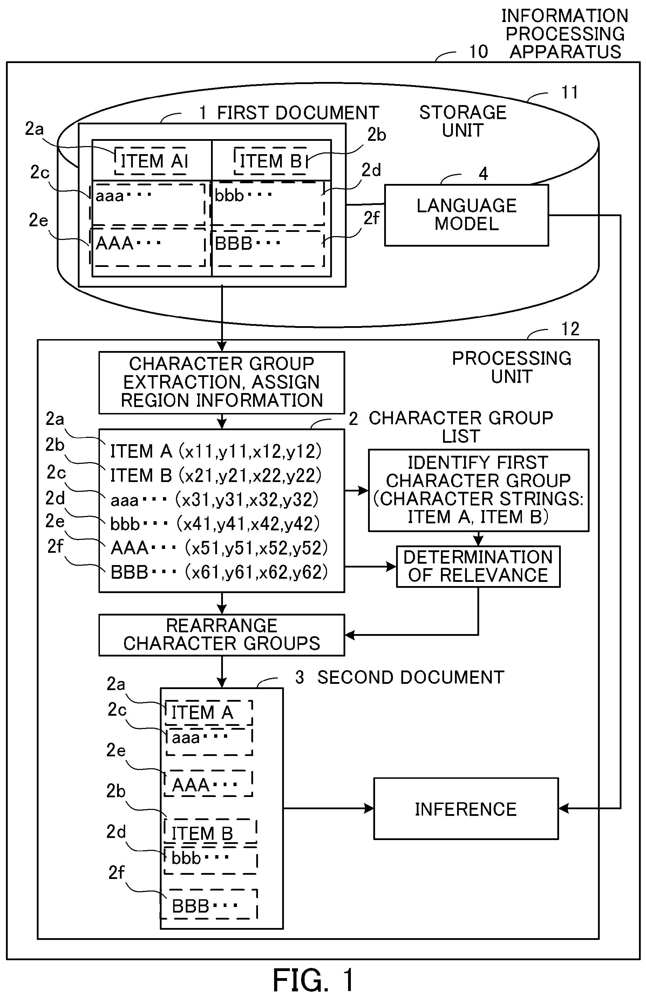

FIG. 1 depicts one example of an information processing method according to the first embodiment. FIG. 1 depicts an information processing apparatus 10 for implementing an information processing method that suppresses scattering of a plurality of pieces of text. As one example, the information processing apparatus 10 implements the information processing method according to the first embodiment by executing a predetermined information processing program.

The information processing apparatus 10 includes a storage unit 11 and a processing unit 12. As examples, the storage unit 11 is a memory or a storage apparatus included in the information processing apparatus 10. As one example, the processing unit 12 is a processor included in the information processing apparatus 10. The information processing apparatus 10 may include a plurality of processors. Different processors out of such plurality of processors may execute a given process and other processes out of a plurality of processes executed by the information processing apparatus 10.

The storage unit 11 stores a first document 1, which is tabulated, and a language model 4. As one example, the first document 1 includes a table in which rectangular text regions (called "text boxes") are arranged in a grid pattern. A character string is set in each text box. In the first document 1, as one example, the horizontal direction is the x-axis and the vertical direction is the y-axis. On the x-axis, coordinate values increase from left to right. On the y-axis, coordinate values increase from top to bottom. Each text box indicates a region in the first document 1 using coordinate values.

The language model 4 is a trained machine learning model that outputs an inference result using character string information in a natural language as an input. As one example, the language model 4 is a neural network model.

The processing unit 12 performs inference using the language model 4 that relates to the information written in the first document 1. Before performing inference, the processing unit 12 extracts text information from the first document 1, and uses the extracted text information to generate the second document 3 to be included in the input to the language model 4. The processing unit 12 generates the second document 3 according to the procedure indicated below to scatter the related pieces of text in the second document 3.

The processing unit 12 acquires the first document 1 from the storage unit 11. The processing unit 12 extracts a plurality of character groups 2a to 2f from the first document 1 based on acquired relative positions between the characters included in the first document 1. As one example, the processing unit 12 extracts a plurality of character groups from the first document based on at least one of vertical and horizontal intervals between characters included in the acquired first document. In more detail, the processing unit 12 places adjacent characters, where the distance between the characters is equal to or less than a predetermined value, in the same character group. The processing unit 12 also places character strings (that is, pieces of text) on adjacent lines, where the distance between the lines is equal to or less than a predetermined value, in the same character group. One character group that has been extracted in this way may include one or more character strings, for example.

The processing unit 12 assigns region information, which indicates a placement region in the first document 1, to each of the plurality of extracted character groups 2a to 2f. As one example, when a placement region of a character group is a rectangular region, upper left coordinates and lower right coordinates of the region are included in the region information. The processing unit 12 generates a character group list 2 including the plurality of character groups 2a to 2f to which the region information has been assigned.

The plurality of character groups 2a to 2f are arranged in this character group list 2. However, at the generation stage of the character group list 2, relevance between the respective contents of the character groups 2a to 2f is not considered. This means that there is the possibility that a plurality of character groups with relevant contents will become scattered within the character group list 2. For this reason, the processing unit 12 also executes the processing described below.

The processing unit 12 identifies first character groups, which include a predetermined character string, out of the plurality of character groups 2a to 2f. As one example, the predetermined character string is a character string designated in advance by the user. In the example in FIG. 1, the character string "item A" and the character string "item B" are predetermined character strings. In this case, the character group 2a and the character group 2b are identified as first character groups.

The processing unit 12 acquires first region information indicating placement regions of the identified first character groups (here, the character groups 2a and 2b). The processing unit 12 also acquires second region information indicating placement regions of a plurality of second character groups (character groups 2c to 2f) aside from the first character group in the plurality of character groups 2a to 2f. The processing unit 12 then determines whether there is relevance between the first character groups and each of the plurality of second character groups based on the first region information and the second region information.

As one example, the processing unit 12 compares the x coordinate of a first character group in the first region information with the x coordinate of the second character group in the second region information, and determines that there is relevance when the difference is within a threshold. As one example, the x coordinates compared here are the x coordinates of the upper left points of the placement regions including the character groups. Alternatively, the processing unit 12 may compare the center coordinates in the x-axis direction of the placement regions including the character groups.

The processing unit 12 rearranges the plurality of character groups 2a to 2f based on the determination result of relevance. As one example, the processing unit 12 generates the second document 3 in which a third character group, which is selected out of the plurality of character groups 2a to 2f and relates to the first character group, is disposed following the first character group. In the example in FIG. 1, in the second document 3, the character group 2a, which is a first character group, is followed by a third character group (the character groups 2c and 2e) that are related to the character group 2a. In the second document 3, the character group 2b, which is another first character group, is followed by a third character group (the character groups 2d and 2f) that are related to the character group 2b.

After generating the second document 3, the processing unit 12 executes inference relating to the second document 3 using the language model 4. As one example, the processing unit 12 executes processing according to the language model 4 by using information relating to the second document 3 as an input into the language model 4, and obtains an output of the language model 4. This output of the language model 4 is the inference result.

As described above, the processing unit 12 generates the second document 3 by rearranging the plurality of character groups 2a to 2f based on the region information of each of the plurality of character groups 2a to 2f, and by doing so arranges the plurality of character groups 2a to 2f so that related character groups are continuous in the second document 3. By doing so, scattering of related pieces of text is suppressed.

Since related character groups are continuous in the second document 3, by performing inference using the second document 3 as an input into the language model 4, inference is performed with no loss in relevance between pieces of text expressed by the tabulation in the first document 1. As a result, the accuracy of inference is improved.

When rearranging the character groups, as one example, the processing unit 12 arranges the third character groups related to the first character group in order of proximity to the placement of the first character group in the first document 1. In more detail, the processing unit 12 determines the existence of relevance between the first character group and each of the plurality of second character groups based on a comparison result between the coordinates of the first coordinate axis (for example, the x axis) of the placement region of the first character group and the coordinates of the first coordinate axis of the predetermined placement region of the plurality of second character groups. The processing unit 12 then rearranges third character groups after the first character group according to the value of the second coordinate axis (for example, the y axis) that is perpendicular to the first coordinate axis and generates the second document 3 in which the rearranged third character groups are arranged so as to follow continuously after the first character group.

As one example, the character groups 2c and 2e have placement regions with similar x coordinates to the placement region of the character group 2a, which is the first character group. For this reason, the character groups 2c and 2e are identified as the third character group that are relevant to the character group 2a. In terms of distance to the character group 2a, which is the first character group, the character group 2c is closer to the character group 2e. For this reason, in the second document 3, the character group 2c is placed below the character group 2a, and the character group 2e is placed below the character group 2c. By arranging the character groups 2a, 2c, and 2e in this manner, the third character groups related to the first character group are disposed following the first character group. A plurality of third character groups that are related to the same first character group are disposed so as to be continuous. As a result, scattering of related text is suppressed.

By disposing the third character groups in the second document 3 in order of proximity to the first character group in the first document 1, the placement order of contents in the first document 1 is also maintained in the second document 3. This means that the accuracy of the inference processing using the second document 3 is improved.

The processing unit 12 may add a specific element, which indicates separation between character groups, to the second document 3. As one example, when a plurality of third character groups that have been extracted from the same text box in the first document 1 are disposed consecutively, the processing unit 12 inserts a specific element between the plurality of third character groups. As one example, this specific element is one or more line break codes. By consecutively inserting line break codes, an empty line (that is, a line on which nothing is placed) is inserted between third character groups.

By inserting the specific element indicating separation between of character groups between the plurality of third character groups, separation of placed content is correctly determined in inference processing performed on the second document 3 using the language model 4. As a result, the accuracy of inference is improved.

In addition, the processing unit 12 may clearly indicate a specific element indicating separation between the third character groups in a prompt indicating an instructed content of the inference that uses the language model 4. As one example, the processing unit 12 generates a prompt in which an explicit indication that the third character groups are separated by the specific element and an instruction to execute inference on the second document 3 using the language model 4 may be written in a natural language. By doing so, in the inference using the language model 4, separation between the third character groups is reliably recognized, which improves the accuracy of the inference.

### Second Embodiment

The second embodiment is a system that performs an information extraction process that extracts information from a tabulated document using a large language model (LLM). As one example, the tabulated document is document data in portable document format (PDF).

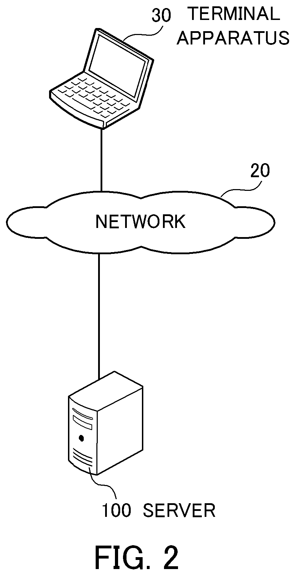

FIG. 2 depicts an example system configuration according to the second embodiment. In this example, a server 100 and a terminal apparatus 30 are connected via a network 20. The server 100 is a computer that provides an information extraction service using an LLM. The terminal apparatus 30 is a computer that transmits an information extraction request to the server 100.

As one example, the user inputs an instruction to extract information from a tabulated document into the terminal apparatus 30. The terminal apparatus 30 then transmits an information extraction request including the tabulated document to the server 100. The server 100 extracts information from the tabulated document in keeping with the information extraction request. The server 100 then transmits structured data including the extracted information to the terminal apparatus 30.

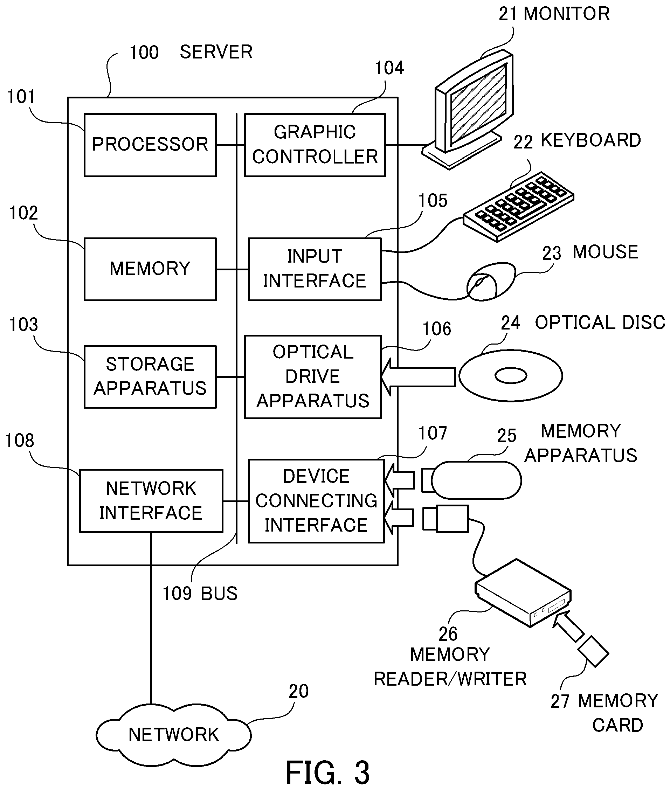

FIG. 3 depicts example hardware of a server. The server 100 as a whole is controlled by a processor 101. A memory 102 and a plurality of peripheral devices are connected via a bus 109 to the processor 101.

The server 100 may be a multiprocessor system including a plurality of processors. A set of processors in a multiprocessor system may be referred to as "the processor 101". The processor 101 may also be referred to as "processor circuitry". Each processor in the plurality of processors may execute some or all of the plurality of processes executed by the server 100. When there are a plurality of related processes, two or more processes out of such related plurality of processes may be executed by different processors.

As examples, the processor 101 is a central processing unit (CPU), a micro processing unit (MPU), or a digital signal processor (DSP). At least some of the functions realized by the processor 101 executing a program may be realized by an electronic circuit, such as an application specific integrated circuit (ASIC) or a programmable logic device (PLD).

The memory 102 is used as a main storage apparatus of the server 100. The memory 102 temporarily stores at least part of an operating system (OS) program and application programs to be executed by the processor 101. The memory 102 also stores various data used for processing by the processor 101. As one example of the memory 102, a volatile semiconductor storage apparatus such as a random access memory (RAM) is used.

The peripheral devices connected to the bus 109 include a storage apparatus 103, a graphics controller 104, an input interface 105, an optical drive apparatus 106, a device connection interface 107, and a network interface 108.

The storage apparatus 103 electrically or magnetically writes and reads data to and from a built-in recording medium. The storage apparatus 103 is used as an auxiliary storage apparatus of the server 100. The storage apparatus 103 stores OS programs, application programs, and various data. Note that as examples of the storage apparatus 103, a hard disk drive (HDD) or a solid state drive (SSD) may be used.

The graphics controller 104 is a computational apparatus that performs image processing. As one example, the graphics controller 104 is a graphics processing unit (GPU). A monitor 21 is connected to the graphics controller 104. The graphics controller 104 displays images on the screen of the monitor 21 in keeping with instructions from the processor 101. Examples of the monitor 21 include a display apparatus that uses organic electroluminescence (EL) and a liquid crystal display apparatus. When a GPU is used as the graphics controller 104, for example, the graphics controller 104 may also execute complex numerical calculations, such as matrix calculations.

A keyboard 22 and a mouse 23 are connected to the input interface 105. The input interface 105 transmits signals sent from the keyboard 22 and the mouse 23 to the processor 101. Note that the mouse 23 is merely one example of a pointing device, and other pointing devices may be used. Examples of other pointing devices include a touch panel, a tablet, a touch pad, and a track ball.

The optical drive apparatus 106 reads data recorded on an optical disc 24 or writes data onto the optical disc 24 using laser light or the like. The optical disc 24 is a portable recording medium on which data is recorded so as to be readable by reflection of light. The optical disc 24 may be a digital versatile disc (DVD), a DVD-RAM, a compact disc read only memory (CD-ROM), a CD-recordable (CD-R), CD-rewritable (CD-RW), or the like.

The device connection interface 107 is a communication interface for connecting peripheral devices to the server 100. As examples, a memory apparatus 25 and a memory reader/writer 26 may be connected to the device connection interface 107. The memory apparatus 25 is a recording medium with a function of communicating with the device connection interface 107. The memory reader/writer 26 is an apparatus that writes data onto a memory card 27 or reads data from the memory card 27. The memory card 27 is a card-type recording medium.

The network interface 108 is connected to the network 20. The network interface 108 transmits and receives data to and from other computers or communication devices via the network 20. The network interface 108 is a wired communication interface connected via a cable to a wired communication apparatus, such as a switch or a router. The network interface 108 may alternatively be a wireless communication interface connected for communication by radio waves to a wireless communication apparatus, such as a base station or an access point.

The server 100 realizes the processing functions of this second embodiment using the hardware described above. Note that the information processing apparatus 10 described in the first embodiment may also be implemented by similar hardware to the server 100 depicted in FIG. 3.

As one example, the server 100 realizes the processing functions of the second embodiment by executing a program recorded in a computer-readable recording medium. A program in which the processing content to be executed by the server 100 is written may be recorded on various types of recording media. As one example, a program to be executed by the server 100 may be stored in advance in the storage apparatus 103. The processor 101 loads at least part of the program in the storage apparatus 103 into the memory 102 and executes the program. The program to be executed by the server 100 may be recorded on a portable recording medium such as the optical disc 24, the memory apparatus 25, or the memory card 27. As one example, the program stored in the portable recording medium becomes executable after being installed in the storage apparatus 103 under the control of the processor 101. Alternatively, the processor 101 may read the program directly from the portable recording medium and execute the program.

The system described above extracts information from a tabulated document.

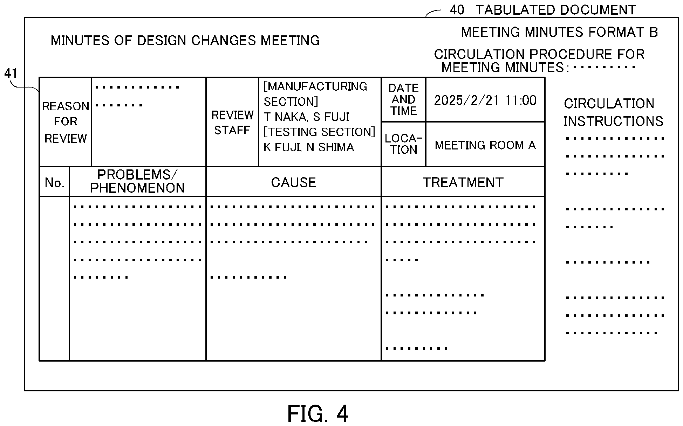

FIG. 4 depicts one example of a tabulated document. In the tabulated document 40, a table 41 is drawn using ruled lines or the like. A plurality of text boxes (rectangular regions) are provided in the table 41. In each of the plurality of text boxes, an item name or a content of the corresponding item is written using text data. A text box in which an item name is written and text data of the item indicated by that item name may be aligned horizontally or vertically.

As one example, in the tabulated document 40, text data of items corresponding to item names such as "Review Reason", "Review Staff", "Time", and "Location" is written in text boxes to the right of the text boxes in which such item names are written. Text data of items corresponding to item names such as "No.", "Problem/Phenomenon", "Cause", and "Treatment" is written in text boxes below the text boxes in which such item names are written.

When extracting information from the tabulated document 40, it is important to accurately extract the content of each item. However, when text data alone is extracted from the tabulated document 40, it is unclear whether the text data is an item name or is text relating to the content of the item.

It is also difficult to accurately determine which item name each piece of text data relates to. The difficulty in accurately extracting the written content for each item from the tabulated document 40 is described below.

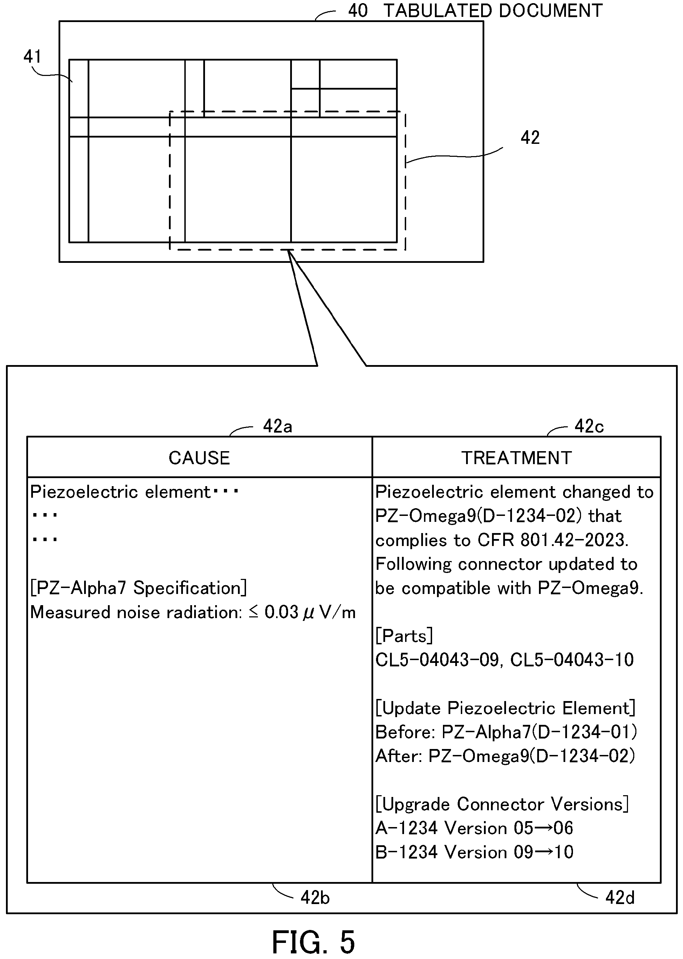

FIG. 5 depicts examples of item names and item contents. The description will here focus on a text box group 42 in the table 41. This text box group 42 includes text boxes 42a and 42b that relate to the item "Cause" and text boxes 42c and 42d that relate to the item "Treatment".

In the text box 42a, the item name "Cause" is written in text format. In the text box 42b, a content related to the item "Cause" is written in text format. In the text box 42c, the item name "Treatment" is written in text format. In the text box 42d, a content related to the item "Treatment" is written in text format.

As one example, by performing inference using the LLM with the text data written in the text box group 42 as an input into the LLM, the server 100 is capable of extracting useful information from the text data. In this case, the server 100 extracts text data from the text box group 42.

Although the text data written in the table 41 in the tabulated document 40 is arranged so as to be easy to read by a person, the data is unstructured, that is, the data is not a structured document, and the relationship between pieces of text is complex. When text data is extracted from such a tabulated document 40, there is the risk of a plurality of related pieces of text becoming scattered.

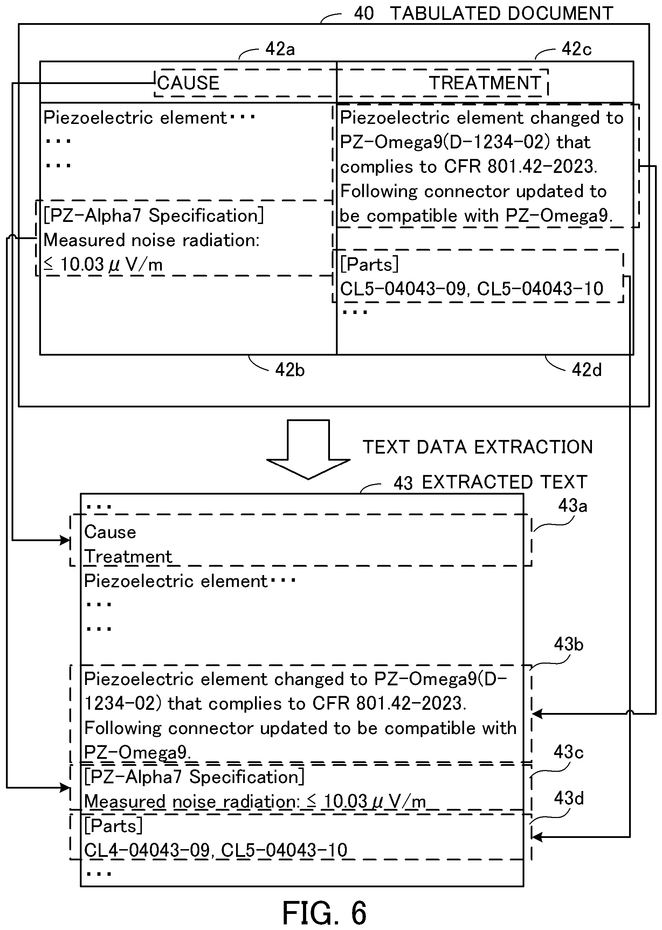

FIG. 6 depicts an example extraction result of text data. When the text data is extracted from the table 41 of the tabulated document 40, as examples, the text data extracted from the text boxes 42a to 42d is indicated in extracted text 43.

In the extracted text 43, first, text 43a of two item names that have been extracted from the text boxes 42a and 42c are written. The text 43c extracted from the text box 42b is written next to the text 43b extracted from the text box 42d, and the text 43d extracted from the text box 42d is then written next to the text 43c.

In the extracted text 43, the item name and the content of the "Cause" item are scattered. In the same way, the item name and the content of the item "Treatment" are scattered. In this way, unless text extraction that is adapted to the tabulation of the tabulated document 40 is performed, item names and their contents will become scattered.

Also, in the extracted text 43, text 43c that was extracted from another text box 42b is sandwiched between two pieces of text 43b and 43d that are consecutive in the text box 42d. In this way, there are cases where pieces of text 43b and 43d that are consecutive in the same text box 42d become scattered in the extracted text 43. That is, the continuity of the related text is not preserved.

In addition, since line breaks are not inserted between paragraphs in the extracted text 43, the beginning and end of paragraphs are not known. This means that even when the extracted text 43 is inputted into an LLM, for example, it is not possible to determine meaning-based groups of text based on text structure.

For this reason, when the server 100 extracts text data from a tabulated document, text data extraction that is adapted to tabulation is performed by making effective use of information relating to the tabulated structure. By doing so, scattering of information when text data is extracted is suppressed, and the accuracy of subsequent information extraction by an LLM or the like is improved. In more detail, the server 100 extracts text data and rearranges the text data according to a text chunk rearrangement method.

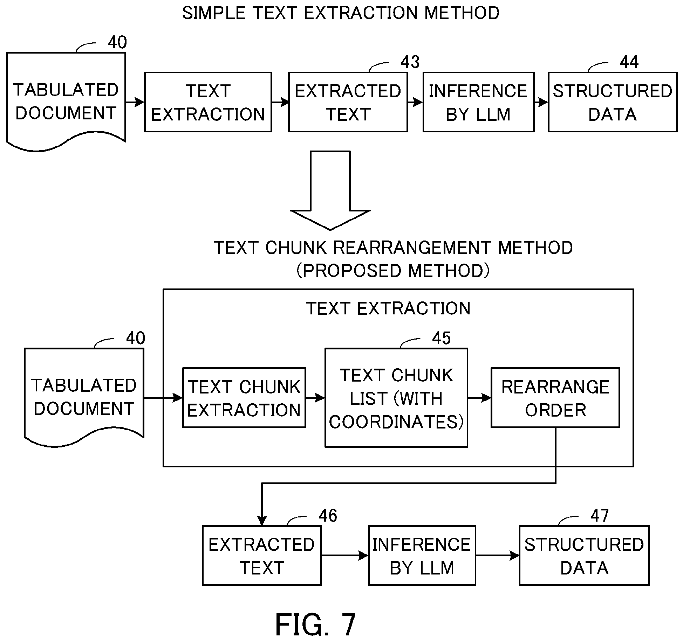

FIG. 7 depicts one example of text extraction by the text chunk rearrangement method. The upper part of FIG. 7 depicts, as a comparative example, a text extraction method (simple text extraction method) for a case where text is simply extracted from the tabulated document 40 without considering the tabulation structure.

With the simple text extraction method, extracted text 43 like that depicted in FIG. 6 is obtained by text extraction from the tabulated document 40. The structure of the text in the extracted text 43 is estimated by inference processing using an LLM on the extracted text 43, thereby generating structured data 44. As one example, in the structured data 44, an item name is assigned information (for example, a tag) indicating an item, and the content of that item is assigned information (for example, a tag) which is associated with the item name and indicates the content of that item.

With the simple text extraction method, when a series of related information becomes scattered in the extracted text 43, this causes a drop in the accuracy of inference using an LLM. In addition, since the text in the extracted text 43 is not appropriately punctuated with paragraph breaks or the like in keeping with the content, this causes a drop in the accuracy of inference using an LLM.

The lower part of FIG. 7 depicts a text chunk rearrangement method, which is the method proposed in this second embodiment. In the text chunk rearrangement method, a character string is extracted from the tabulated document 40 for each text box. Words and their positional relationships are then interpreted and text chunks are rearranged.

In more detail, text chunks are extracted from the tabulated document 40. A text chunk is a character string describing a certain content. Coordinate information indicating a region in the tabulated document 40 in which the text chunk is placed is assigned to the extracted text chunk. By extracting the text chunks, a text chunk list 45 is generated. The plurality of text chunks included in the text chunk list 45 are then rearranged based on the written content and the coordinates, thereby generating extracted text 46. As one example, in the extracted text 46, pieces of text related to the same item are placed continuously (that is, without being scattered).

Inference is performed using the extracted text generated by the text chunk rearrangement method as an input into the LLM, thereby generating structured data 47. In the extracted text 46, information that is related is not scattered by the text chunk rearrangement method, and breaks are provided between paragraphs and the like according to the content. Inference performed using an LLM will correctly interpret such related information as being related. Due to the breaks between paragraphs and the like, the inference by the LLM will correctly interpret whether the same content is continuing or whether there has been a change in content. As a result, accurate structured data 47 is generated.

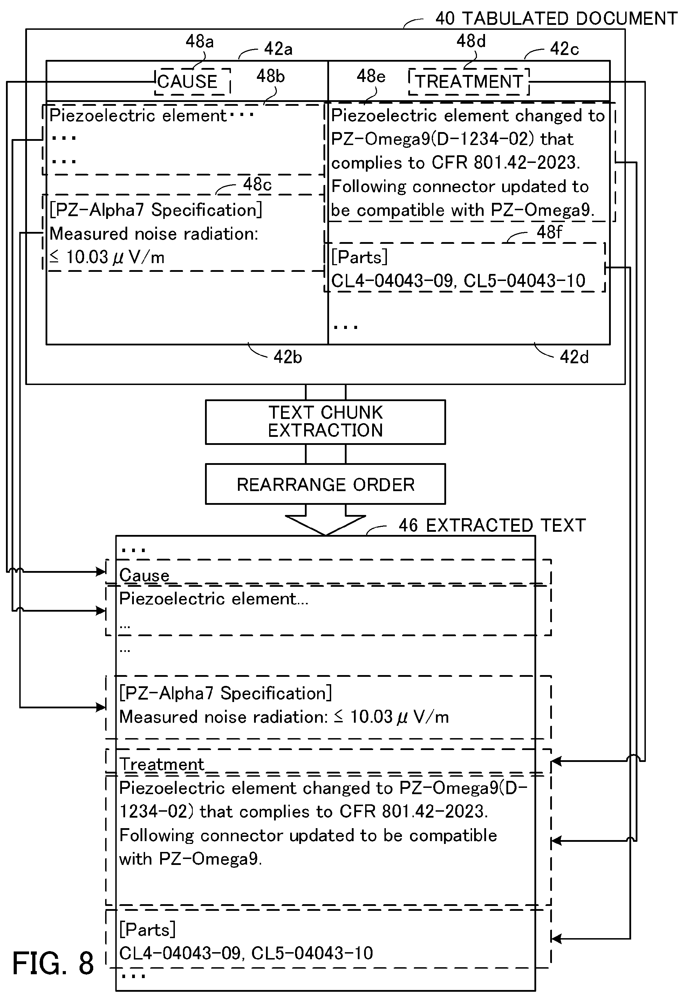

FIG. 8 depicts one example of a text extraction result produced by the text chunk rearrangement method. In the text chunk extraction process, as one example, characters close to each other are included in the same text chunk. One or more text chunks are extracted from each of the plurality of text boxes 42a to 42d.

In the example of FIG. 8, a text chunk 48a is extracted from the text box 42a by the text chunk extraction process. Text chunks 48b and 48c are extracted from the text box 42b. A text chunk 48d is extracted from the text box 42c. Text chunks 48e, 48f, ... are extracted from the text box 42d. The extracted text chunks 48a to 48f, ... are appropriately rearranged and combined to generate the extracted text 46.

In the extracted text 46, the item name of the item "Cause" is followed by the content of the item "Cause". Also in the extracted text 46, the item name of the item "Treatment" is followed by the content of the item "Treatment".

In this way, the text chunk reordering scheme collectively places relevant information together in the extracted text 46 without such information being scattered. As a result, the accuracy of information extraction using the extracted text 46 is improved.

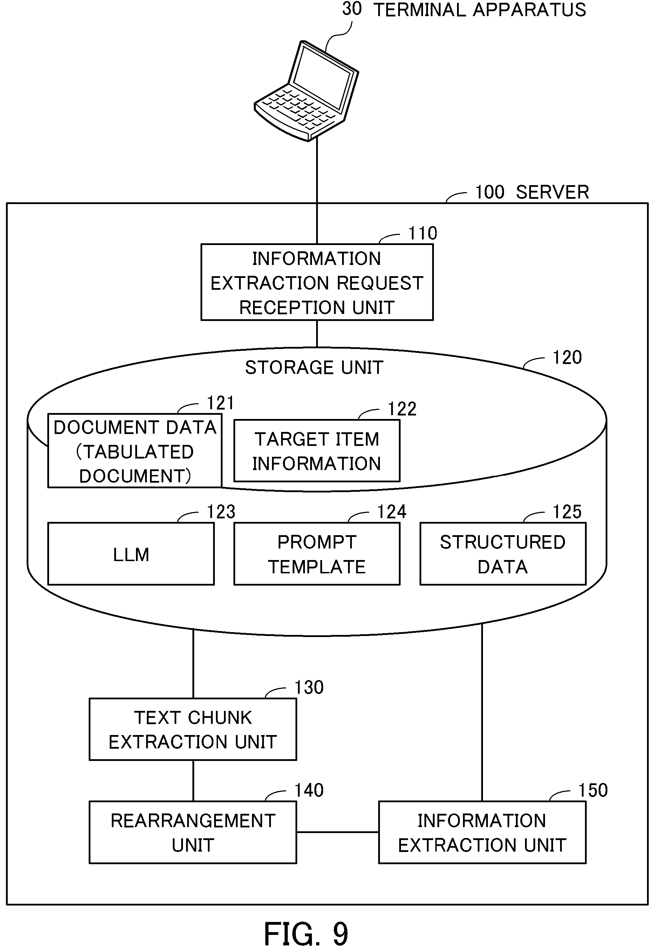

FIG. 9 is a block diagram depicting example functions of a server for implementing the text chunk rearrangement method. The server 100 includes an information extraction request reception unit 110, a storage unit 120, a text chunk extraction unit 130, a rearrangement unit 140, and an information extraction unit 150.

The information extraction request reception unit 110 receives an information extraction request from the terminal apparatus 30. As one example, the information extraction request includes document data 121 from which information is to be extracted. The document data 121 is a tabulated document, for example. The information extraction request includes target item information 122 indicating extraction target items. On acquiring the information extraction request, the information extraction request reception unit 110 stores the document data 121 and the target item information 122 included in the information extraction request in the storage unit 120. When structured data 125 has been generated in response to an information extraction request, the information extraction request reception unit 110 transmits the structured data 125 to the terminal apparatus 30.

The storage unit 120 stores document data 121, target item information 122, an LLM 123, a prompt template 124, and the structured data 125. The storage unit 120 is a storage area that forms part of the memory 102 or the storage apparatus 103.

The LLM 123 is a trained machine learning model. As one example, the LLM 123 is a model of a neural network. The prompt template 124 is a template for prompts to be inputted into the LLM 123. The structured data 125 is structured data including information extracted in the information extraction process. As one example, the structured data 125 is data in JavaScript (registered trademark) object notation (JSON) format.

When the document data 121 extracted from the information extraction request has been stored in the storage unit 120, the text chunk extraction unit 130 extracts text chunks from the document data 121. The text chunk extraction unit 130 transmits a text chunk list including the extracted text chunks to the rearrangement unit 140.

The rearrangement unit 140 rearranges the text chunks included in the text chunk list based on the content and the coordinates of the text boxes where the text chunks were extracted. The rearrangement unit 140 combines the rearranged text chunks to generate the extracted text 46. The rearrangement unit 140 transmits the extracted text 46 to the information extraction unit 150.

The information extraction unit 150 extracts information from the extracted text 46 using the LLM 123. The information extraction unit 150 then generates the structured data 125 based on the extracted information. The information extraction unit 150 stores the generated structured data 125 in the storage unit 120.

Note that as one example, it is possible to realize the functions of each element depicted in FIG. 9 by causing the processor 101 to execute a program module corresponding to that element.

Next, various types of information used in the information extraction process will be described in more detail.

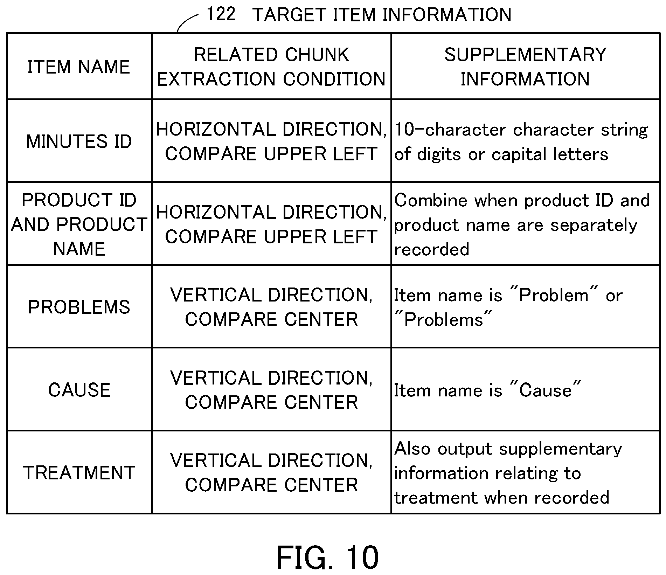

FIG. 10 depicts one example of the target item information. In the target item information 122, a related chunk extraction condition and supplementary information are set in association with an item name of an item set as a target for information extraction.

A related chunk extraction condition is an extraction condition for extracting related text chunks based on a text chunk (or "key text chunk") that satisfies a predetermined condition. In the related chunk extraction condition, as examples, a search direction for related chunks and the position of a text box used to determine whether a chunk is a related chunk are designated.

When "Horizontal direction" is set as the related chunk extraction condition, a search for related text chunks is performed in the horizontal direction from the text box from which the key text chunk has been extracted. When "Vertical direction" is set as the related chunk extraction condition, a search for related text chunks is performed in the vertical direction from the text box from which the key text chunk has been extracted.

When "Compare upper left" is designated as the related chunk extraction condition, the upper left coordinates of the text box from which the key text chunk has been extracted are compared with the upper left coordinates of a text box from which a text chunk whose relevance is being determined has been extracted. When "Compare center" is designated as the related chunk extraction condition, the center coordinates of the text box from which the key text chunk has been extracted are compared with the center coordinates of a text box from which a text chunk whose relevance is being determined has been extracted.

The supplementary information is information that serves as a clue when extracting information using the LLM 123 or information relating to how extracted information is to be handled. As one example, for an item with the item name "Minutes ID", the supplementary information indicates that a 10-character character string composed of numbers or capital letters is the content of the item. For an item with the item name "Product ID and Product name", the supplementary information indicates that when the product ID and the product name are written separately, information extraction is to be performed so as to combine the product ID and the product name into a single item. For an item with the item name "Problem", the supplementary information indicates that the character string of the item name is "Problem" or "Problems". For an item with the item name "Cause", the supplementary information indicates that the character string of the item name is "Cause". For an item with the item name "Treatment", when a supplementary explanation relating to the treatment is provided, the supplementary information indicates that such character string is also to be extracted.

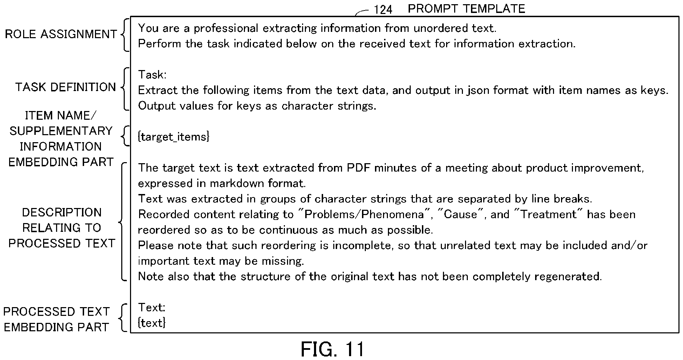

FIG. 11 depicts one example of a prompt template. The prompt template 124 includes a description of role assignment of a personality to be imitated by the LLM 123. Appropriate role assignment is expected to improve inference accuracy. As one example, the role assignment designates that a task of extracting information from a text is to be performed from the viewpoint of a professional.

The prompt template 124 also includes a definition of the task. The definition of the task designates items to be extracted, a data format to be outputted, and the like. An embedded part of item names and supplementary information is provided below the definition of the task. An item name or names and the supplementary information indicated by the target item information 122 are inserted into this embedded part of item names and supplementary information.

The prompt template 124 also includes a description of the processed text. As one example of the description of the processed text, a description states that the processed text has been extracted from minutes of a meeting.

The description of the processed text also clearly indicates that the text was extracted in units of character string groups, and such groups are separated by line breaks. By indicating this clearly, it becomes possible for grouped content to be correctly interpreted by inference using the LLM 123.

The description of the processed text also clearly indicates that content of the extraction target items has been adjusted so as to be written continuously and that such adjustment is not exhaustive. By indicating this clearly, the recognition accuracy of the content of items is improved in the inference using the LLM 123.

A processed text embedding part is provided at the bottom of the prompt template 124. The extracted text 46 obtained by combining the rearranged text chunks is inserted into this processing target text embedding part.

Next, the procedure of the information extraction process will be described in detail.

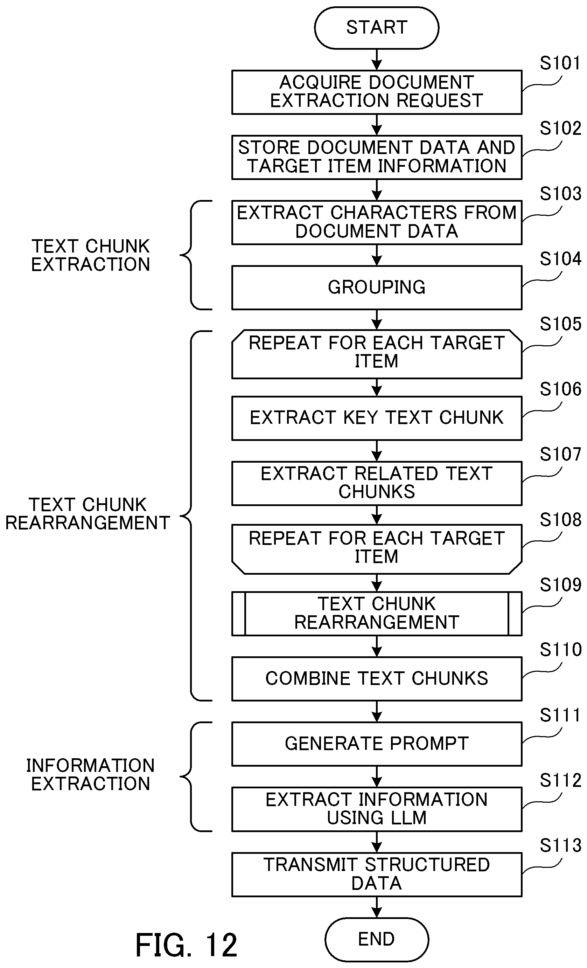

FIG. 12 is a flowchart depicting an example procedure of the information extraction process. The processing depicted in FIG. 12 is described below in order of the step numbers.

[Step S101] The information extraction request reception unit 110 acquires a document extraction request, which relates to extraction from document data that is a tabulated document, from the terminal apparatus 30.

[Step S102] The information extraction request reception unit 110 stores the document data included in the acquired document extraction request and the target item information 122 in the storage unit 120.

[Step S103] The text chunk extraction unit 130 extracts characters from the document data. When doing so, the text chunk extraction unit 130 assigns coordinates in the document data of each extracted character to that extracted character.

[Step S104] The text chunk extraction unit 130 groups the extracted characters. As one example, the text chunk extraction unit 130 includes characters whose inter-character distance is equal to or less than a predetermined threshold in the same group. The text chunk extraction unit 130 sets a set of characters included in the same group as a text chunk. The text chunk extraction unit 130 also determines a rectangular region in the document data including all of the characters included in the text chunk.

The text chunk extraction unit 130 assigns coordinate information indicating a rectangular region corresponding to the text chunk to the text chunk. As one example, the text chunk extraction unit 130 assigns coordinate information indicating the upper left coordinates and the lower right coordinates of the rectangular region corresponding to the text chunk to the text chunk. The text chunk extraction unit 130 may alternatively assign coordinates of a predetermined position (upper left or center) of the rectangular region corresponding to the text chunk and coordinate information indicating a horizontal width and a vertical width to the text chunk.

The processing in steps S103 and S104 described above is the text chunk extraction process. The text chunk extraction unit 130 transmits a text chunk list including the text chunks extracted in the text chunk extraction process to the rearrangement unit 140.

[Step S105] The rearrangement unit 140 executes the processing in steps S106 and S107 for each target item indicated in the target item information 122.

[Step S106] The rearrangement unit 140 extracts a key text chunk of a target item from the text chunk list. As one example, the rearrangement unit 140 extracts a text chunk including the item name of the target item as a key text chunk.

When a plurality of text chunks include the item name of the target item, the rearrangement unit 140 narrows down the key text chunk candidates to a single text chunk according to a predetermined rule. As one example, when the search direction for related chunks is specified as the horizontal direction in the related chunk extraction condition, the rearrangement unit 140 extracts the leftmost text chunk including the item name of the target item as the key text chunk. When the search direction for related chunks is specified as the vertical direction in the related chunk extraction condition, the rearrangement unit 140 extracts the uppermost text chunk including the item name of the target item as the key text chunk.

The rearrangement unit 140 may extract an upper left text chunk in a region of interest (ROI) as a key text chunk. As one example, the region of interest is a region including every text chunk including the item name of the target item.

[Step S107] The rearrangement unit 140 extracts text chunks relating to the extracted key text chunk from the text chunk list. As one example, the rearrangement unit 140 extracts text chunks relating to the target item in accordance with the related chunk extraction condition indicated in the target item information 122.

[Step S108] When the rearrangement unit 140 has executed the processing in steps S106 and S107 for every target item, the processing proceeds to step S109.

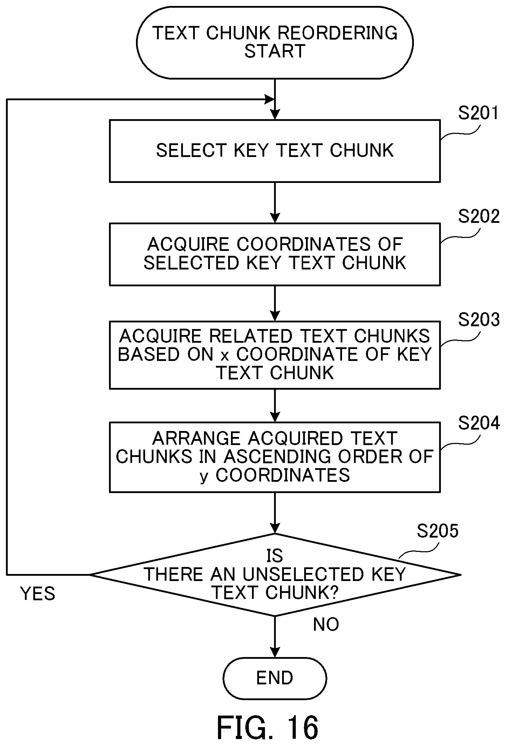

[Step S109] The rearrangement unit 140 performs a text chunk reordering process. This text chunk reordering process will be described in detail later (see FIG. 16).

[Step S110] The rearrangement unit 140 combines the rearranged text chunks to generate the extracted text 46. The rearrangement unit 140 transmits the generated extracted text 46 to the information extraction unit 150.

The processing in steps S105 to S110 described above is the text chunk rearrangement process.

[Step S111] The information extraction unit 150 generates a prompt to be inputted into the LLM 123 using the prompt template 124. As one example, the information extraction unit 150 embeds the item names and the supplementary information indicated in the target item information 122 into the prompt template 124. The information extraction unit 150 also embeds the extracted text 46 generated by rearranging the text chunks into the prompt template 124.

[Step S112] The information extraction unit 150 performs the information extraction process using the LLM 123. As one example, the information extraction unit 150 executes processing according to the LLM 123 using the generated prompt as an input into the LLM 123 and obtains an output of the LLM 123. As one example, the information extraction unit 150 acquires the structured data 125 including the extracted information as the output of the LLM 123. The information extraction unit 150 stores the acquired structured data 125 in the storage unit 120.

The processing in steps S111 and S112 described above is the information extraction process.

[Step S113] The information extraction request reception unit 110 transmits the structured data 125 obtained by the information extraction process to the terminal apparatus 30.

By doing so, the information extraction process, which uses the extracted text 46 in which related contents have been gathered together for each item, outputs highly accurate information as the structured data 125.

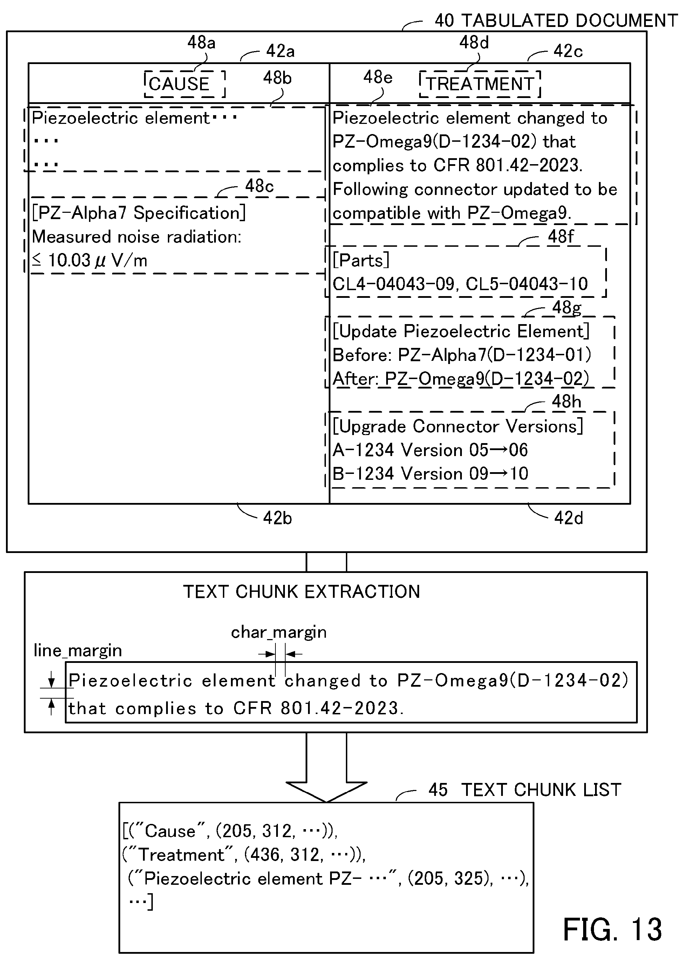

FIG. 13 depicts one example of the text chunk extraction process. As one example, focus is placed on the text boxes 42a to 42d of the tabulated document 40. The text chunk extraction unit 130 obtains the arrangement of characters and the intervals (that is, the number of points) between horizontally adjacent characters based on the coordinates of each character in the text boxes 42a to 42d. The text chunk extraction unit 130 determines whether the interval between horizontally adjacent characters is equal to or less than a preset threshold char_margin. char_margin is a parameter indicating the maximum number of points in an interval between horizontally aligned characters (that is, the relative distance in the horizontal direction) that are regarded as the same chunk. char_margin is specified by a relative value with respect to the character width of single characters, for example. When the interval between horizontally adjacent characters (that is, relative distance in the horizontal direction) is equal to or less than char_margin, the text chunk extraction unit 130 gathers the adjacent characters into the same text chunk.

The text chunk extraction unit 130 also obtains an interval (that is, the number of points) between vertically adjacent lines. The text chunk extraction unit 130 determines whether the interval between lines is equal to or less than a preset threshold (line_margin). line_margin is a parameter indicating the maximum number of points in an interval between vertically adjacent lines that are regarded as the same chunk. line_margin is specified by a relative value with respect to the height of one line, for example. When the interval between vertically adjacent lines is equal to or less than line_margin, the text chunk extraction unit 130 gathers the character strings included on the adjacent lines into the same text chunk.

In the example in FIG. 13, text chunks 48a to 48h are extracted from the text boxes 42a to 42d. Coordinate information is assigned to the extracted text chunks 48a to 48h. The text chunk list 45 including the extracted text chunks 48a to 48h is then generated. It is possible here that the arrangement of the text chunks 48a to 48h in the text chunk list 45 is not an appropriate order.

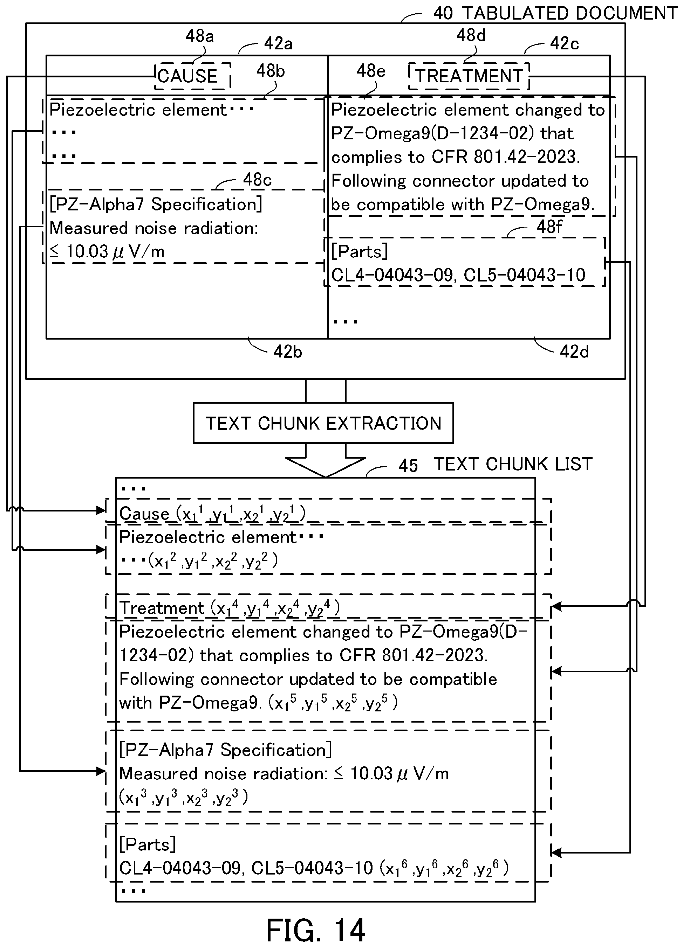

FIG. 14 depicts one example of a generated text chunk list. In the example in FIG. 14, out of the text chunks 48a to 48f, the "Cause" text chunk 48a is set first in the text chunk list 45. The text chunk 48b indicating the content of "Cause" is set after the text chunk 48a. The "Treatment" text chunk 48d is set next to the text chunk 48b. The text chunk 48e indicating the content of "Treatment" is set after the text chunk 48d. A text chunk 48c indicating the content of "Cause" is set after the text chunk 48e. A text chunk 48f indicating the content of the "Treatment" is set after the text chunk 48c.

In this way, in the text chunk list 45, the order of the text chunks is not appropriate. That is, in the text chunk list 45, a plurality of text chunks relating to the same item are disposed apart from each other. For this reason, the text chunk reordering process is performed.

Note that in the text chunk reordering process, a key text chunk is used as a reference and text chunks that relate to the same item as the key text chunk are arranged below the key text chunk.

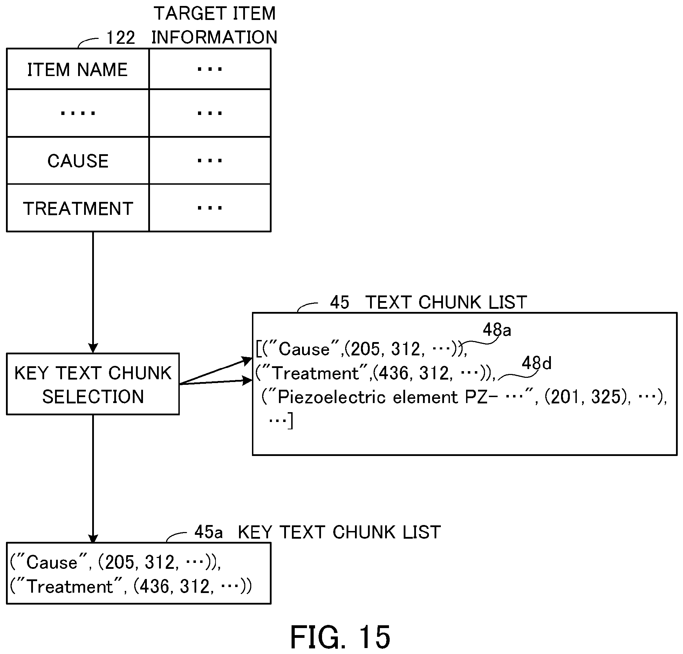

FIG. 15 depicts one example of a key text chunk selection process. As one example, the key text chunk is a text chunk including an item name indicated in the target item information 122. In the example in FIG. 15, the text chunk 48a "Cause" and the text chunk 48d "Treatment" are extracted as key text chunks. A key text chunk list 45a is then generated.

The text chunk reordering process is executed based on the extracted key text chunks.

FIG. 16 is a flowchart depicting an example procedure of the text chunk reordering process. The processing depicted in FIG. 16 is described below in order of the step numbers.

[Step S201] The rearrangement unit 140 selects one unselected key text chunk from the key text chunk list 45a.

[Step S202] The rearrangement unit 140 acquires coordinates indicating a region in the document data 121 of the selected key text chunk.

[Step S203] Based on the x coordinate of the selected key text chunk, the rearrangement unit 140 acquires text chunks related to the key text chunk.

[Step S204] The rearrangement unit 140 arranges the acquired text chunks under the selected key text chunk in ascending order of the y-coordinate (that is, in order of height position in the document data 121).

[Step S205] The rearrangement unit 140 determines whether there is an unselected key text chunk in the key text chunk list 45a. When there is an unselected key text chunk, the processing of the rearrangement unit 140 advances to step S201. When every key text chunk has been selected, the rearrangement unit 140 ends the text chunk reordering process.

Next, a method of extracting text chunks related to a key text chunk will be described.

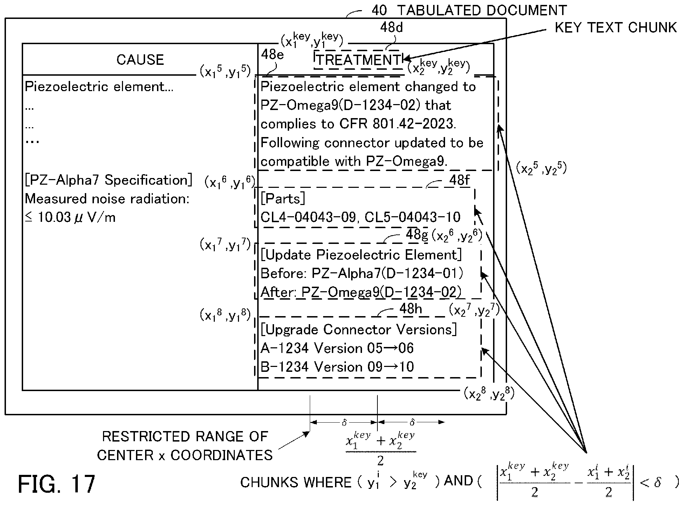

FIG. 17 depicts a first example of a method of extracting related text chunks. As one example, it is assumed that the text chunk 48d "Treatment" has been selected as the key text chunk to be processed. The upper left coordinates of the region of the key text chunk in the tabulated document 40 are (x₁^{key}, y₁^{key}). The lower right coordinates of the region are (x₂^{key}, y₂^{key}).

The upper left coordinates of the region of the text chunk 48e in the tabulated document 40 are (x₁⁵, y₁⁵), and the lower right coordinates of the region are (x₂⁵, y₂⁵). The upper left coordinates of the region of the text chunk 48f in the tabulated document 40 are (x₁⁶, y₁⁶), and the lower right coordinates of the region are (x₂⁶, y₂⁶). The upper left coordinates of the region of the text chunk 48g in the tabulated document 40 are (x₁⁷, y₁⁷), and the lower right coordinates of the region are (x₂⁷, y₂⁷). The upper left coordinates of the region of the text chunk 48h in the tabulated document 40 are (x₁⁸, y₁⁸), and the lower right coordinates of the region are (x₂⁸, y₂⁸).

The rearrangement unit 140 sets the coordinate information indicating the region of the key text chunk as "BBox = (x₁^{key}, y₁^{key}, x₂^{key}, y₂^{key})". The upper left coordinates of the region of an i^{th} text chunk to be compared are (x₁ⁱ, y₁ⁱ), and the lower right coordinates of the region are (x₂ⁱ, y₂ⁱ). Here, text chunks below the key text chunk (y₁ⁱ > y₂^{key}) and within a restricted range of x coordinates are extracted. As one example, text chunks within the restricted range of x coordinates are text chunks for which the difference in the center coordinate from the key text chunk is less than a threshold δ. A determination of whether the difference between the center coordinates of the i^{th} text chunk and the key text chunk is less than the threshold δ is performed using Equation (1) below, for example. $\left|\frac{{x}_{1}^{key} + {x}_{2}^{key}}{2}-\frac{{x}_{1}^{i} + {x}_{2}^{i}}{2}\right| < δ$ (1)

In the example in FIG. 17, text chunks 48e to 48h are extracted as text chunks relating to the key text chunk. The text chunks 48e to 48h are then arranged in the extracted text 46 in ascending order of the value of "y₁ⁱ".

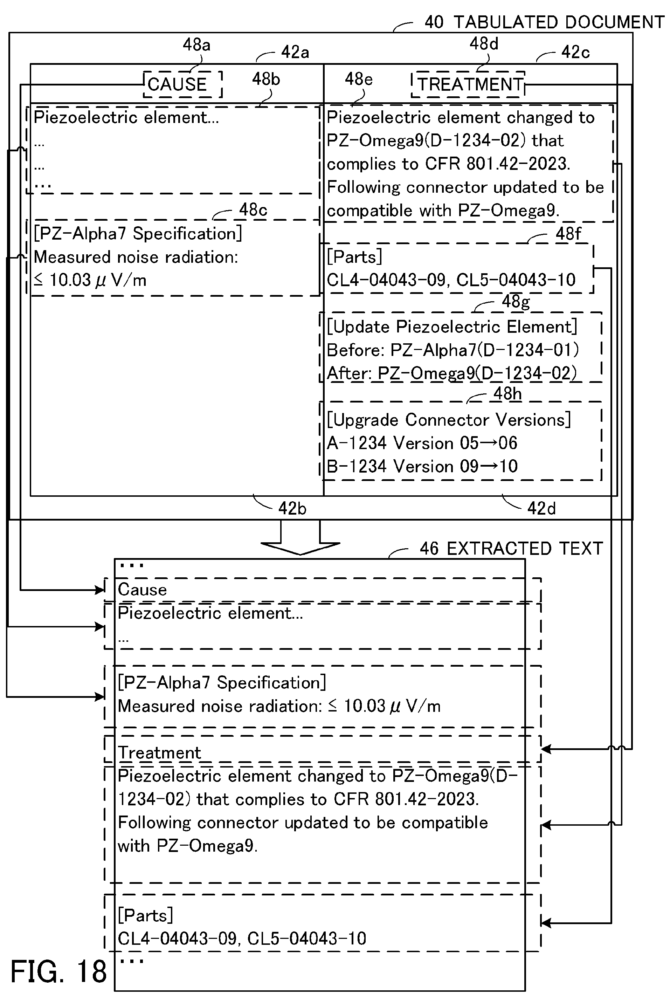

FIG. 18 depicts one example of extracted text after rearrangement of text chunks. In the extracted text 46, text chunks 48b and 48c indicating the content of "Cause" are placed in order below the text chunk 48a of the item name "Cause". Also in the extracted text 46, text chunks 48e to 48f indicating the content of "Treatment" are placed in order below the text chunk 48d of the item name "Treatment". Although not depicted in FIG. 18, text chunks 48g and 48h are placed in order below the text chunk 48f in the extracted text 46.

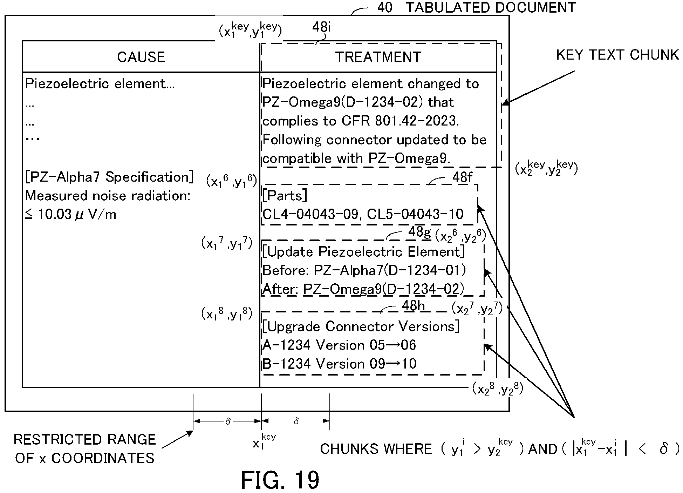

FIG. 19 depicts a second example of a method of extracting related text chunks. Note that in the example in FIG. 19, the text chunk 48d and the text chunk 48e of FIG. 17 form a single text chunk 48i. As one example, when the line interval between the "Treatment" line and the "Piezoelectric element ..." line below the "Treatment" line is narrower than a predetermined threshold, the "Treatment" line is gathered into the same text chunk as the line below.

In this case, it is possible to extract text chunks related to the key text chunk by focusing on the upper left coordinates of each text chunk. As one example, text chunks below the key text chunk (y₁ⁱ > y₂^{key}) and within a restricted range of x coordinates are extracted. As one example, text chunks within the restricted range of x coordinates are text chunks whose upper left x coordinate is close to the upper left x coordinate of the key text chunk. A determination of whether the upper left x coordinates of the i^{th} text chunk and the key text chunk are close to each other (that is, the difference is less than a threshold δ) is performed using Equation (2) below, for example. $\left|{x}_{1}^{key}-{x}_{1}^{i}\right| < δ$ (2)

In the example in FIG. 19, text chunks 48f to 48h are extracted as text chunks relating to the key text chunk. The text chunks 48f to 48h are then arranged in the extracted text 46 in ascending order of the value of "y₁ⁱ".

Information included in the document data 121 is extracted using the extracted text 46 generated as described above. The information extraction process is performed using the LLM 123. For this reason, a prompt is generated for use as an input into the LLM 123.

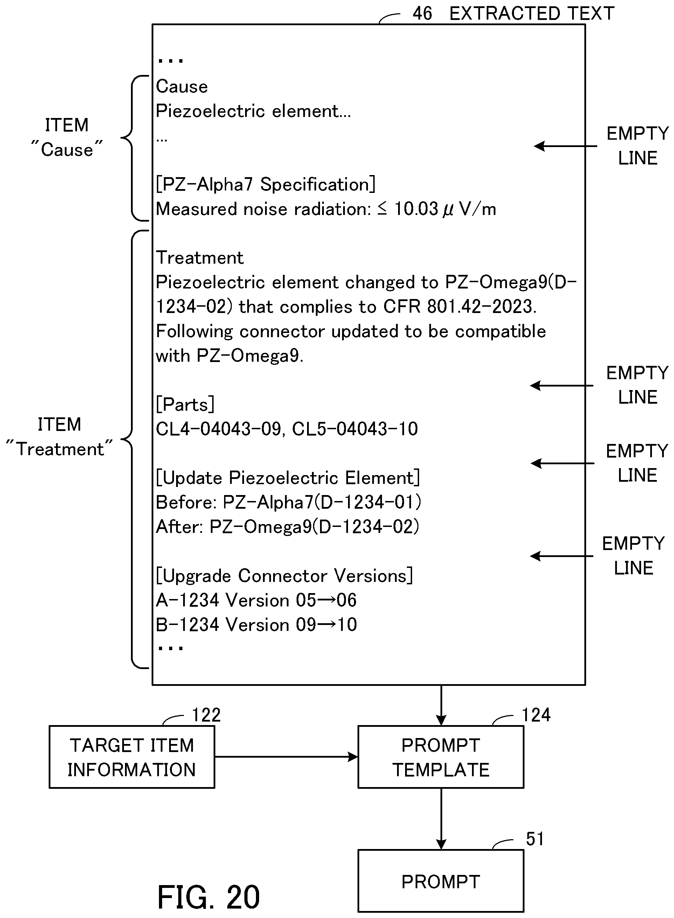

FIG. 20 depicts one example of the prompt generation process. In the extracted text 46, pieces of content are gathered for each item. That is, scattering of pieces of content corresponding to an item name is suppressed in the extracted text 46. Insertion of text of other items between a plurality of paragraphs indicating the content of the same item is also suppressed in the extracted text 46. Line breaks are also inserted between paragraphs in the extracted text 46, which clearly indicates breaks between paragraphs.

However, due to differences in the formats of tabulated documents, the arrangement of the text boxes, and the like, it is difficult to completely eliminate the scattering of information in the extracted text 46. By extracting information using the LLM 123, it is possible to complement any issues due to a lack of information uniformity in the extracted text 46. As one example, it is possible to combine a small number of pieces of related information that do become scattered.

To use the LLM 123, a prompt 51 to be inputted into the LLM 123 is generated using the prompt template 124.

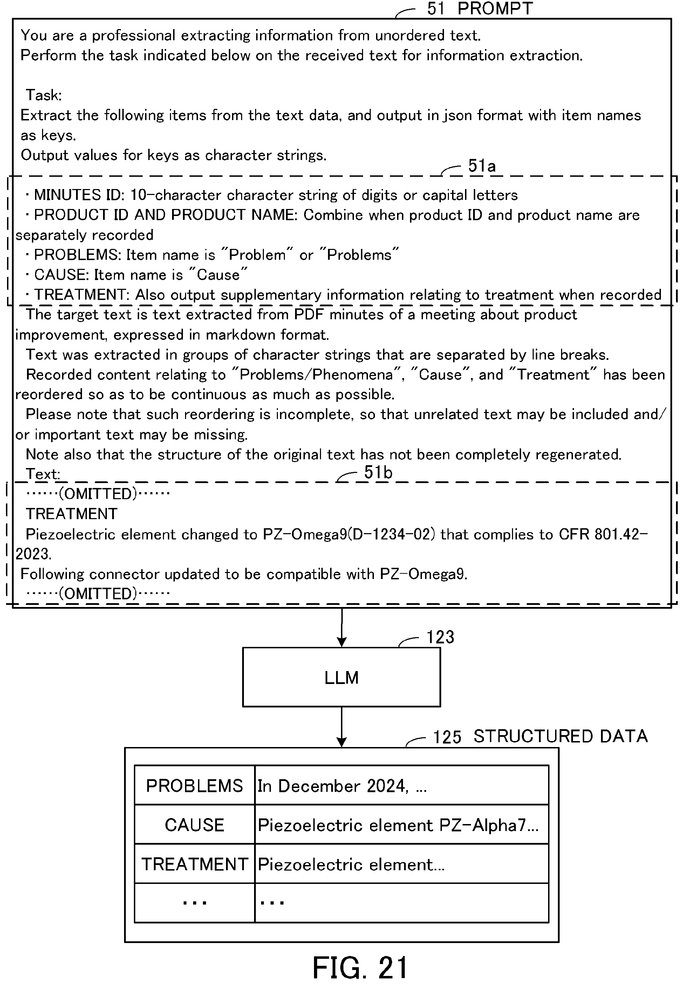

FIG. 21 depicts one example of a prompt. As one example, the prompt 51 includes the written content of the prompt template 124. Information on the extraction target items indicated by the target item information 122 is inserted at a predetermined location 51a of the prompt 51. The extracted text 46 is also inserted at a predetermined location 51b of the prompt 51.

By inputting this prompt 51 into the LLM 123 and executing processing according to the LLM 123, appropriate information extraction is performed, thereby generating the structured data 125. In the structured data 125, as one example, the content of an item is written in association with the item name of the extraction target item.

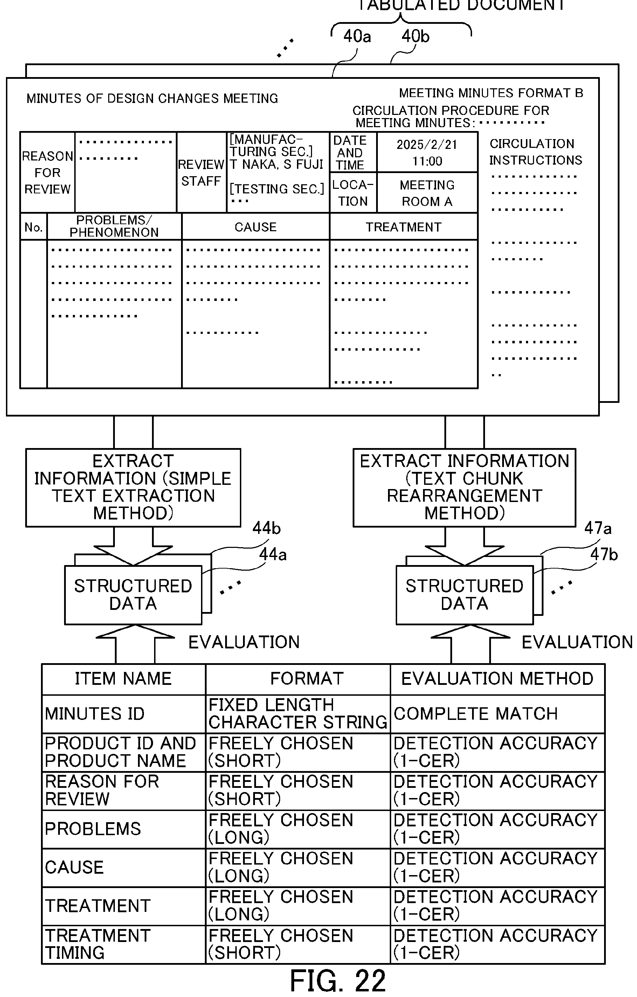

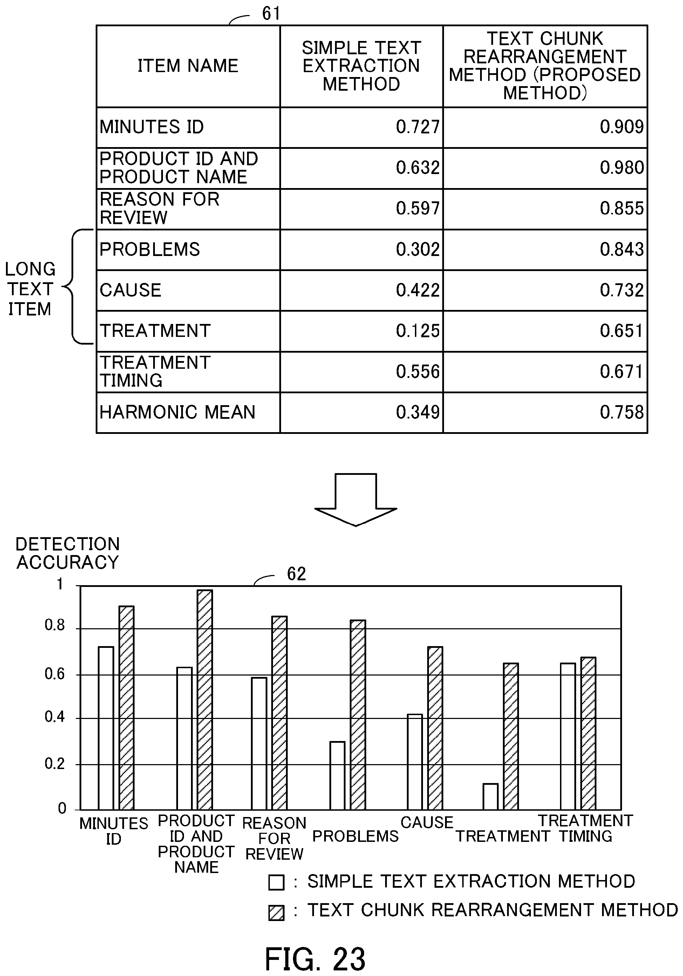

By doing so, the information on the extraction target item is detected from the document data 121 with high accuracy, and such detected information is included in the structured data 125. FIGS. 22 and 23 depict comparison results of the information extraction process between a simple text extraction method and a text rearrangement method. The simple text extraction method is a method of extracting text without extracting and rearranging text chunks. The text rearrangement method is a text extraction method (proposed method) for extracting and rearranging text chunks applied in this second embodiment.

FIG. 22 depicts one example of a method of verifying information extraction results. FIG. 22 depicts an evaluation method of extraction results for a case where information extraction from each of a plurality of tabulated documents 40a, 40b, ... relating to minutes of a meeting has been performed by different information extraction methods.

One information extraction method employs a simple text method for generating extracted text before inputting into the LLM 123. The detection accuracy is evaluated for a plurality of pieces of structured data 44a, 44b, ... generated by inputting extracted text, which was extracted by the simple text method from the tabulated documents 40a, 40b, ... into the LLM 123.

The other information extraction method employs a text chunk rearrangement method for generating extracted text before inputting into the LLM 123. The detection accuracy is evaluated for a plurality of pieces of structured data 47a, 47b, ... generated by inputting extracted text, which was extracted by the text chunk rearrangement method for each of the tabulated documents 40a, 40b, ... into the LLM 123.

The item names of the extraction target items are "Minutes ID", "Product ID and Product Name", "Reason for Review", "Problem", "Cause", "Treatment", and "Treatment Timing". The content of the "Minutes ID" is a character string with fixed number of characters. The content of "Product ID and product name", "Reason for consideration", and "Treatment timing" are character strings of short texts with a freely chosen content. The contents of "Problem", "Cause", and "Treatment" are character strings of long texts with a freely chosen content.

Evaluation of "Minutes ID" is performed based on whether the minutes ID included in the tabulated documents 40a, 40b, ... completely matches the extracted minutes ID. For the other items, the accuracy between the content of each item included in the tabulated documents 40a, 40b, ... and the extracted information is evaluated using an edit distance. As one example, accuracy is evaluated using a detection accuracy expressed as "1-CER", where CER is the character error rate. CER is a value obtained by dividing the edit distance by the number of characters in the correct character string. The edit distance is the minimum number of operations (insertion, deletion, and replacement) that convert an extracted character string into the correct character string.

The more accurately information is detected, the smaller the value of the edit distance and the smaller the value of CER. That is, the higher the detection accuracy "1-CER", the higher the information extraction accuracy.

FIG. 23 depicts one example of an evaluation result of the information extraction process. Table 61 indicates the detection accuracy of each item for each text extraction method. A graph 62 indicates the difference in detection accuracy for each text extraction method by way of a bar graph. The vertical axis of the graph 62 represents the detection accuracy. In the horizontal axis direction of the graph 62, rectangular bars where detection accuracy for each item name is indicated by the length of the bar are arranged. Unshaded rectangular bars indicate the detection accuracy of the simple text extraction method. The shaded rectangular bars indicate the detection accuracy of the text chunk rearrangement method.

Compared to when the simple text extraction method is used, the overall accuracy increases by 35 to 41 points when the text chunk rearrangement method is used. In addition, by using the text chunk rearrangement method, it is possible to acquire information with high accuracy even for items (for example, "Treatment") that the simple text extraction method was barely capable of acquiring.

As described above, according to the second embodiment, text (text chunks) are extracted for sections of text, and the order in the extracted text 46 is determined based on words present in the text chunks and the positional relationships between the text chunks. Coordinates indicating the position of the region (text box) where extraction was performed are assigned to the text chunks, and the order is determined based on such coordinates. Each text chunk is considered to have semantic unity, so that rearranging in units of text chunks makes it easy to perform rearrangement that suppresses scattering of related information. In addition, by inserting line breaks or blank lines indicating breaks between text chunks, pieces of content are clearly separated.

Also when rearranging the text chunks, chunks whose coordinates in the document data are close are placed close to each other in the text. It is assumed that when coordinates are close to each other, the text chunks are semantically close, with text chunks with highly relevant content being arranged closer together.

The order of pieces of related text is rearranged with a text chunk including the item name of the extraction target as a key text chunk. By doing so, the order of the text is determined from the positional relationships between the coordinates of the text chunk including the item name and other pieces of text, with pieces of text for the same item being aligned continuously.

### Other Embodiments

Although the information extraction unit 150 executes inference using the LLM 123 in the second embodiment, the inference processing may be executed by an external computer. As one example, the information extraction unit 150 generates a prompt and transmits the generated prompt to an AI server that provides an inference service using the LLM 123. The information extraction unit 150 then acquires the structured data 125 from the AI server.

Although several embodiments have been described above, the configurations of respective units described in the embodiments may be replaced with other configurations with the same functions. Other freely chosen components or processes may also be added. In addition, any two or more configurations (features) in the embodiments described above may be combined into single configurations.

According to one aspect, scattering of a plurality of pieces of related text extracted from a document is suppressed.

## Claims

1. A computer program that causes a computer to execute a process comprising:
acquiring a first document (1) that is tabulated;
extracting a plurality of character groups (2a - 2f) from the first document (1) based on relative positions between characters included in the acquired first document (1) ;
assigning region information indicating a placement region in the first document (1) to each of the plurality of character groups (2a - 2f);
identifying a first character group including a predetermined character string from the plurality of character groups (2a - 2f);
determining whether the identified first character group and each of a plurality of second character groups, which are character groups in the plurality of character groups (2a - 2f) aside from the first character group, are related to each other, based on first region information indicating a placement region of the first character group and second region information indicating placement regions of the plurality of second character groups; and
generating a second document (3) in which third character groups, which are character groups related to the first character group out of the plurality of second character groups, are arranged following the first character group.

2. The computer program according to claim 1,
wherein the computer program further causes the computer to execute inference on the second document (3) using a language model (4).

3. The computer program according to claim 1,
wherein the extracting of the plurality of character groups includes extracting the plurality of character groups from the first document based on at least one of vertical and horizontal intervals between characters included in the acquired first document.

4. The computer program according to claim 1,
wherein the determining includes determining whether the first character group and each of the plurality of second character groups are related, based on a result of comparison between a coordinate on a first coordinate axis of a placement region of the first character group and a coordinate on the first coordinate axis of a predetermined placement region of the each of the plurality of second character groups, and
the generating of the second document (3) includes rearranging the third character groups following the first character group according to a value on a second coordinate axis that is perpendicular to the first coordinate axis, and generating the second document (3) in which the rearranged third character groups are arranged continuously following the first character group.

5. The computer program according to claim 1,
wherein the generating of the second document (3) includes consecutively arranging a plurality of third character groups extracted from a same text box in the first document (1), with a specified element inserted between the plurality of third character groups.

6. The computer program according to claim 5,
wherein the computer program further causes the computer to generate a prompt in which an explicit indication that the third character groups are separated by the specified element and an instruction to execute inference on the second document (3) using a language model (4) are written in a natural language.

7. An information processing method executed by a computer, the method comprising:
acquiring a first document (1) that is tabulated;
extracting a plurality of character groups (2a - 2f) from the first document (1) based on relative positions between characters included in the acquired first document (1) ;
assigning region information indicating a placement region in the first document (1) to each of the plurality of character groups (2a - 2f);
identifying a first character group including a predetermined character string from the plurality of character groups (2a - 2f);
determining whether the identified first character group and each of a plurality of second character groups, which are character groups in the plurality of character groups (2a - 2f) aside from the first character group, are related to each other, based on first region information indicating a placement region of the first character group and second region information indicating placement regions of the plurality of second character groups; and
generating a second document (3) in which third character groups, which are character groups related to the first character group out of the plurality of second character groups, are arranged following the first character group.

8. An information processing apparatus comprising:
processing means for:
acquiring a first document (1) that is tabulated;
extracting a plurality of character groups (2a - 2f) from the first document (1) based on relative positions between characters included in the acquired first document (1);
assigning region information indicating a placement region in the first document (1) to each of the plurality of character groups (2a - 2f);
identifying a first character group including a predetermined character string from the plurality of character groups (2a - 2f);
determining whether the identified first character group and each of a plurality of second character groups, which are character groups in the plurality of character groups (2a - 2f) aside from the first character group, are related to each other, based on first region information indicating a placement region of the first character group and second region information indicating placement regions of the plurality of second character groups; and
generating a second document (3) in which third character groups, which are character groups related to the first character group out of the plurality of second character groups, are arranged following the first character group.
